# EUROPÄISCHE PATENTSCHRIFT

(11) **EP 0 988 352 B1**
(45) Veröffentlichungstag und Bekanntmachung des Hinweises auf die Patenterteilung: **18.12.2002**
(21) Anmeldenummer: 98939498.6
(22) Anmeldetag: 09.06.1998
(51) Int. Cl.: C09J 133/08

(54) **EMISSIONSARMER WÄSSRIGER DISPERSIONS-KLEBSTOFF**
LOW-EMISSION AQUEOUS DISPERSION ADHESIVE
ADHESIF SOUS FORME DE DISPERSION AQUEUSE A FAIBLE TAUX D'EMISSION

(30) Priorität: 13.06.1997 DE 19725038
(43) Veröffentlichungstag der Anmeldung: 29.03.2000
(73) Patentinhaber: Henkel Kommanditgesellschaft auf Aktien, 40589 Düsseldorf (DE)
(72) Erfinder: TAMCKE, Thomas, D-40593 Düsseldorf (DE); ZSCHÄBITZ, Kirsten, 05000 Aarau (CH)
(86) Internationale Anmeldenummer: EP9803461
(87) Internationale Veröffentlichungsnummer: WO98056867

(56) Entgegenhaltungen:
- DE-A- 4 039 781
- DE-A- 19 716 876

## Beschreibung

Die Erfindung betrifft einen emissionsarmen wäßrigen Dispersionsklebstoff auf der Basis von Polyacrylaten mit Zusätzen von klebrigmachenden Harzen, Weichmachern bzw. schwerer flüchtigen, d.h. hoch siedenden Lösemitteln sowie weiteren Zusätzen, zum Beispiel Emulgatoren, Füllstoffe, Filmbildungshilfsmittel, Konservierungsmittel, Entschäumer und Verdicker. Außerdem betrifft die Erfindung die Herstellung dieses Dispersionsklebstoffes sowie seine Verwendung.

Derartige Dispersions-Klebstoffe sind bekannt. So wird in der EP 0 490 191 A2 eine Klebstoffzusammensetzung beschrieben, die A) einen wäßrigen Acrylat-Klebstoff und B) eine Mischung aus einem klebrigmachenden Harz und einer Verbindung der allgemeinen Formel R¹⁻O-(X-O)ₙ-R² enthält, in der X ein Alkylen mit 2 bis 4 C-Atomen, n eine ganze Zahl von 1 bis 8 und R¹ und R² Wasserstoff oder ein Aryl- oder Alkarytrest mit 6 bis 12 C-Atomen sind, wobei R¹ und R² nicht gleichzeitig Wasserstoff sind.

Bei derartigen Harzmischungen aus Harzen und einem Weichmacher bzw. einem Hochsiedelösungsmittel sind die erhaltenen Klebstoffe umso emissionsärmer je geringer der Anteil dieser Stoffe im Klebstoff und je höher das Molekulargewicht des Weichmachers bzw. des Hochsieders ist. Um so mehr nimmt jedoch auch die Viskosität zu, so daß die Harzmischungen nur sehr schwer in die Klebstoffdispersion bei üblichen Bedingungen (60 - 90 °C) eingearbeitet werden können. Durch Erhöhung des Anteils an Weichmacher bzw. hoch siedenden Lösemittels kann die Viskosität der Harzmischung zwar gesenkt werden, jedoch werden dann auch wesentliche Eigenschaften der daraus hergestellten Klebstoffe gravierend verändert. So werden dann z.B. die rheologischen Eigenschaften (Viskosität, Verstreichbarkeit) des daraus hergestellten Klebstoffes verschlechtert und die offene Zeit wird verkürzt.

Ausgehend von diesem Stand der Technik galt es, die Emissionswerte noch weiter zu senken, ohne daß die sonstigen Eigenschaften bei der Herstellung und der Verarbeitung sowie die klebetechnischen Eigenschaften gegenüber Klebstoffen mit typischen hochsiedenden Lösemitteln verschlechtert werden. Das gilt insbesondere für die Einarbeitung der Harzmischung in die Polymerdispersion, die Viskosität und Verstreichbarkeit des Klebstoffes, die offene Zeit, die Anfangsklebkraft, die Endklebkraft und die Wärmestandfestigkeit der Klebung.

Die erfindungsgemäße Lösung ist den Patentansprüchen zu entnehmen. Sie besteht im wesentlichen darin, daß der emissionsarme wäßrige Dispersions-Klebstoff auf der Basis von Polyacrylaten eine Harzmischung enthält, die
a) Balsam-Kolophonium (Harzsäure),
b) einen Weichmacher und
c) einen carboxylierten Kolophonium-Weichharzester
umfaßt. Neben diesen notwendigen Komponenten kann der Dispersionsklebstoff noch weitere Zusätze enthalten, die zum Teil auch schon in die Harzmischung eingearbeitet sein können. Typische Zusätze sind: Kolophonium-Harzester, hoch siedende Lösungsmittel, Dispergier-Hilfsmittel, Filmbildungshilfsmittel, Konservierungsmittel, Entschäumer, Verdickungsmittel und Füllstoffe.

Geeignete Polyacrylat-Dispersionen werden zum Beispiel in der EP 0 490 191 A2 beschrieben. Auf sie wird ausdrücklich Bezug genommen. Demnach besteht das Polyacrylat zum großen Teil aus Acrylaten und/oder Methacrylaten von 1 bis 24 C-Atomen enthaltenden Alkoholen. Im allgemeinen sind diese Monomerbausteine zu mehr als 25 Gew.-% in dem Polyacrylat enthalten. Weitere Monomerbausteine sind zum Beispiel: Vinyl- und Allylester von Carbonsäuren mit 1 bis 20 C-Atomen, Vinylether von Alkoholen mit 1 bis 8 C-Atomen, vinylaromatische Verbindungen, Vinylhalogenide, nicht aromatische Kohlenwasserstoffe mit 2 bis 8 C-Atomen und mindestens einer orifinischen Doppelbindung, α-, β-ungesättigte Mono- oder Dicarbonsäuren mit 3 bis 6 C-Atomen sowie deren Derivate (vor allem Amide, Ester und Salze).
Die Gewichtsanteile der Monomerbausteine werden so gewählt, daß das Polyacrylat eine Glasübergangstemperatur von minus 60 bis 0 °C aufweist, vorzugsweise von minus 50 bis minus 10 °C. Zu weiteren Einzelheiten und vor allem zu der Herstellung der wäßrigen Polyacrylat-Dispersionen sei auf die EP 0 490 191 A2 verwiesen.

Es können aber auch Polyacrylat-Dispersionen gemäß der EP 0 620 243 verwendet werden.

Der Feststoffgehalt der wäßrigen Polyacrylate-Dispersionen liegt im Bereich von 40 bis 65 Gew.-% gemessen nach DIN 53189.

Als klebrigmachendes Harz wird Balsam-Kolophonium (Harzsäure) eingesetzt. Sie kann unmodifiziert verwendet werden und hat dann eine Säurezahl von ca. 170 mg KOH pro Gramm (DIN 53402). Das Balsam-Kolophonium kann jedoch auch modifiziert sein, z. B. mit Formaldehyd oder Maleinsäureanhydrid.

Bei den Weichmachern handelt es sich gemäß DIN 55945 um flüssige oder feste indifferente organische Substanzen mit geringem Dampfdruck. Aufgrund ihres Löse- und Quellvermögens verringern sie die Härte des Polymeren und steigern sein Haftvermögen.

Geeignete Weichmacher sind z.B. die in der EP 0 490 191 genannten Ether der allgemeinenen Formel wie sie in der Beschreibungseinleitung zitiert ist. Darin ist R¹ vorzugsweise Wasserstoff. X ist beispielsweise 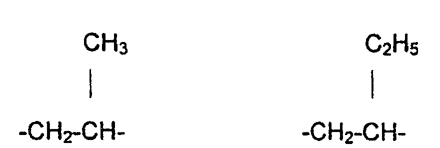 und bevorzugt -CH₂-CH₂-. n ist beispielsweise 2, 3 und bevorzugt 1. R² ist beispielsweise Phenyl. Beispielhafte Verbindungen sind: 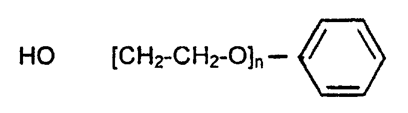 wobei n 2 oder 3 und insbesondere 1 (= Monophenylglykol) ist.

Vorzugsweise werden als Weichmacher Ester mit geringer Flüchtigkeit eingesetzt, vor allem Benzoate und Phthalate. Als konkrete Verbindungen seien genannt: Dioctylphthalat, Diisononyl-phthalat , Diisodecylphthalat, Phthalsäureester mit überwiegend linearen C₆ bis C₁₁-Alkoholen, Dibutylphthalat, Diisobutylphthalat, Dicyclohexylphthalat, Dimethylphthalat, Diethylphthalat und Mischester aus Benzyl-butyl-, Butyl-octyl-, Butyl-decylphthalat und Dipentylphthalat, Dimethylglykolphthalat, Dicaprylphthalat, Diethylenglykol- und Dipropylenglykol-Dibenzoat.

Es werden also aromatenhaltige Weichmacher eingesetzt mit einer Siedetemperatur bei Normaldruck von mehr als 250 °C, vorzugsweise mehr als 300 °C und besonders bevorzugt mehr als 350 °C.

Hochsiedende Lösemittel sollen dagegen einen Siedepunkt im Bereich von 200 bis 300 °C haben. Als konkrete Verbindungen seien genannt: Phenoxyethanol, Phenoxypropanol, Butyldiglykolacetat.

Bei dem carboxylierten Kolophonium-Weichharzester handelt es sich um ein spezielles Weichharz, also um ein Harz, daß bei Normaltemperatur flüssig ist. Es soll bei 40 °C eine dynamische Viskosität von 20 bis 40 Pascal Sekunde nach DIN 53214 haben. Der carboxylierte Kolophonium-Weichharzester sollte eine Säurezahl im Bereich von 80 bis 120, vorzugsweise 90 bis 110 mg KOH/g nach DIN 53402 und eine Hydroxylzahl von 40 bis 110, vorzugsweise 60 bis 90 mg KOH/g nach DIN 53240 haben. Der Harzester kann sowohl gesättigt als auch ungesättigt sein. Vorzugsweise wird ein Produkt der Firma Kraemer, Delmenhorst, Deutschland, mit dem Namen Erkapol VP 1923 eingesetzt. Der carboxylierte Kolophonium-Weichharzester kann z.B. durch Veresterung von Balsam-Kolophonium mit einer Säurezahl von ca. 160 bis 170 mg KOH/g durch Diole wie Di- oder Triethylenglykol mit anschließender Teilveresterung der OH-Gruppen durch Säureanhydride, wie z.B. Maleinsäureanhydrid erhalten werden.

Der Kolophonium-Harzester hat einen Erweichungsbereich von 60 bis 90 °C (Ring and ball) und eine Säurezahl von weniger als 10 mg KOH/g, vorzugsweise 0 mg KOHIg. Es handelt sich dabei konkret um einen Glycerinharzester oder um einen Pentaerythritharzester.

Als Füllstoffe kommen vor allem anorganische Füllstoffe in Frage, insbesondere Kreide und Quarzmehl. Bei der Kreide handelt es sich vorzugsweise um feingemahlene und gefällte Kreide mit einem mittleren Teilchendurchmesser von im allgemeinen 2 bis 10 µm. Das Quarzmehl hat üblicherweise einen mittleren Teilchendurchmesser von 3 bis 20 µm.

Die Entschäumer beruhen z.B. auf Mineralölen oder Silikonen und die Verdicker auf (Meth)acrylsäure-(Co)polymerisaten und Cellulosederivaten.
Als Konservierungsmittel sei genannt: Benzisothiazolenon (BIT), Chlormethylisothiazolenon (CMIT) etc..
Als Emulgatoren sei genannt: Sulfosuccinate, Alkylarylpolyglykolether, Phosphorsäureester etc.

Üblicherweise enthält die Harzmischung folgende Komponenten mit den angegebenen Gewichtsanteilen in Gew.-%:
30 bis 80, vorzugsweise 50 bis 70 Balsam Kolophonium,
10 bis 40, vorzugsweise 20 bis 30 Weichmacher,
5 bis 30, vorzugsweise 10 bis 20 carboxylierten Kolophonium-Weichharzester
0 bis 30, vorzugsweise 10 bis 15 Kolophonium-Harzester und
0 bis 30, vorzugsweise 0 bis 10 eines hoch siedenden Lösemittels.

Die Herstellung der Harzmischung bereitet keine Schwierigkeit. Wie üblich können die Komponenten bei Temperaturen zwischen Raumtemperatur und 90 °C in einem Rührwerk homogenisiert werden. In der Regel werden das Harz oder der Weichmacher im Rührwerk vorgelegt.

Die Säurezahl der Harzmischung sollte größer als 80, vorzugsweise größer als 100 mg KOH/g sein. Die Viskosität sollte unter 4, vorzugsweise unter 3 Pas liegen (Brookfield HBT SP6, 20 UpM, 80 °C).

Es werden 5 bis 25, vorzugsweise 10 bis 20 Gewichtsanteile der Harzzusammensetzung mit 20 bis 60, vorzugsweise 30 bis 50 Gewichtsanteilen wäßriger Polymerdispersion, vorzugsweise mit einem Feststoffgehalt von 55 bis 65 Gew.-%, und mit 15 bis 55, vorzugsweise 20 bis 50 Gewichtsanteilen an Füllstoffen gemischt. Die übrigen möglichen Zusätze spielen gewichtsmäßig eine untergeordnete Rolle. Die Komponenten lassen sich ohne Probleme unter den üblichen Bedingungen (vor allem bei Temperaturen zwischen 70 und 80 °C) zu dem erfindungsgemäßen wäßrigen Dispersionsklebstoff verarbeiten.
Im allgemeinen wird der erfindungsgemäße Dispersionsklebstoff folgendermaßen hergestellt: Die wäßrige Polyacrylat-Dispersion wird bei 10 bis 90 °C im Rührwerk vorgelegt und Zusätze wie Entschäumer, Konservierungsmittel, Verdicker, Emulgatoren und Wasser sowie der Füllstoff unter Rühren zugegeben. Dann wird unter kräftigem Rühren die auf 70 bis 100 °C erwärmte Harzmischung portionsweise oder kontinuierlich zugegeben. Schließlich wird die Viskosität durch Zusatz von Verdicker bzw. Wasser reguliert.

Je nach Anwendungsgebiet sollte der erfindungsgemäße wäßrige Dispersionsklebstoff auf Polyacrylatbasis unterschiedlichen Anforderungen genügen. Für die Verklebung von Fußbodenbelägen sind folgende Kenndaten des Klebstoffes von Bedeutung: Die Viskosität nach HAAKE VT 100/4/E 100 sollte mehr als 25 , vorzugsweise mehr als 35 bis max. 60 Skalenteile betragen.
Die Anfangsklebkraft (Tack) sollte mehr als 3 (Note), vorzugsweise mehr als 2 (Note) betragen.
Die offene Zeit sollte mehr als 15, vorzugsweise mehr als 20 bis maximal 40 Minuten betragen. Eine offene Zeit unter 10 Minuten wird als ungenügend bezeichnet.

Die erfindungsgemäßen Dispersionsklebstoffe erfüllen diese Anforderungen und zeichnen sich darüber hinaus durch eine gute Verstreichbarkeit (Rheologie) und ungewöhnlich hoher Endfestigkeiten aus. Darüber hinaus sind sie deutlich emissionsärmer, was auch an dem merkbar verringertem Geruch festgestellt werden kann und insbesondere in geeigneten Prüfkammern bestimmbar ist.

Der erfindungsgemäße Klebstoff eignet sich aufgrund der hervorragenden Eigenschaften besonders gut zum Verkleben von Fußbodenbelägen. Dazu wird er z.B. mit einer Zahnleiste auf dem Untergrund aufgetragen. Nach dem üblichen Ablüften wird der Bodenbelag eingelegt.

Die Erfindung wird nun anhand von Beispielen im einzelnen erläutert.

### Beispiele

### 1. Basisrezeptur für einen wasserbasierten PVC-Belag-Klebstoff

| lfd. Nr. | Komponenten | Anteil (%) |
|---|---|---|
| 1. | Acrylat-Copolymer-Dispersion mit einer Feststoff-Konzentration von 62 % | 28 |
| 2. | Harzzubereitung (s. Beispiele 1-5) | 14 |
| 3. | Kreide | 43 |
| 4. | Polyalkylglykol | 2 |
| 5. | Entschäumer, Konservierungsmittel, Verdicker (Typ Cellulose + Typ Polyacrylsäure), Emulgator (nichtionogen) | 2 |
| 6. | Wasser | Rest zu 100% |

### 2. Herstoffvorschrift Klebstoff und Harzzubereitung

### 2a. Klebstoff nach Punkt 1

1. Dispersion (1) im Mischbehälter vorlegen und Rührwerk anstellen.
2. (2) und (3) zugeben, kurz einrühren.
3. (4) in (5) aufschlämmen, dann zugeben und sorgfältig verrühren.
4. (6), (7), (8) und (9) zugeben und glattrühren (Zwischenprobe ziehen).
5. Unter kräftigem Rühren die auf 80 °C erwärmte Harzzubereitung (10) in den Ansatz geben und homogenisieren.
6. (11) zugeben.
7. Ablaßviskosität mit dem restlichen Wasser (12) einstellen.

### 2b. Harzmischung nach Beispiel 1-5 (s. Tabelle)

1. Hochsieder bzw. Weichmacher im Rührwerk vorlegen.
2. Balsamkolophonium gegebenenfalls zerkleinern und unter Rühren zugeben.
3. Je nach Rezeptur feste Kolophoniumharzester zugeben.
4. Rührwerk schließen und auf 90 °C erwärmen.
5. Je nach Rezeptur das auf ca. 60 °C erwärmte Weichharz (carboxylierter Kolophoniumweichharzester oder andere) zugeben.
6. Bei 90 °C für 20 Minuten homogenisieren.

**Tabelle:**

| Zusammensetzung | Beispiel 1 | Beispiel 2 | Beispiel 3 | Beispiel 4 | Beispiel 5 |
|---|---|---|---|---|---|
| Balsamkolophonium (Harzsäure) | 64 % | 64 % | 74 % | 64 % | 60 % |
| Kolophoniumharzester, fest | 16 % | 16% | | | |
| Kolophoniumweichharzester | | | | 16 % | |
| carboxyl. Kolophoniumweichharzester | | | | | 20 % |
| Hochsieder | 20 % | | | | |
| Weichmacher | | 20 % | 26 % | 20 % | 20 % |

| Kenndaten der Harzzubereitung | | | | | |
|---|---|---|---|---|---|
| Säurezahl (mg KOH/100 g | 103 | 103 | 118 | 103 | 118 |
| Viskosit Brookf. HBT SP6/ 20 UpM, 80°C (mPa*s) | 900 | 5600 | 3100 | 2500 | 2600 |

| Kenndaten des Klebstoffes (Basis: Acronal DS 3478 X) | | | | | |
|---|---|---|---|---|---|
| Einarbeitkeit der Harzzubereitung | gut | ungenügend | befriedigend | ausreichend | gut |
| Viskosität HAAKE VT100/4/E100 (Skt) | 36 | 17 | 21 | 21 | 47 |
| Verstreichbarkeit (Rheologie) | gut | mangelhaft | gut | ausreichend | gut |
| Anfangsklebkraft (Tack) | gut | ungenügend | befriedigend | mangelhaft | gut |
| offene Zeit | gut | ungenügend | ausreichend | ungenügend | gut |

### Bemerkungen:

Die Beispiele 1 und 3 geben den Stand der Technik wieder.
Das Beispiel 5 ist erfindungsgemäß.
Die Beispiele 2 und 4 demonstrieren unbefriedigende Entwicklungen.

### 3. Prüfmethodenbeschreibung

Ermittlung der Klebstoffkenndaten

### Viskosität

Die Viskosität nach Brookfield oder HAAKE wird an 500 g Mustern bei 23 °C gemessen. Die Viskosität der Harzzubereitung wird üblicherweise bei 80 °C ermittelt. (Methode: z.B. ISO 2555)

### Einarbeitbarkeit der Harzschmelze

### Verstreichbarkeit

Die Parameter werden während der Laborversuche subjektiv nach Schulnoten beurteilt und anhand von Praxistest bestätigt.

### Tack/offene Zeit

### Methodenbeschreibung:

Auf einer vorgestrichenen und mit einer zementären Ausgleichmasse gespachtelten Spanplatte (1000 x 180 x 10) mm wird der zu prüfende Klebstoff mit Zahnleiste A3 aufgetragen (Klebstoffriefen quer zur Plattenlängsrichtung) und die Stoppuhr gestartet.

Nach 10 Minuten und in weiteren Abständen von 5 Minuten wird jeweils ein PVC-Belag-Streifen (200 x 45) mm in den Klebstoff eingelegt und mit einer 3,5 kg Andrückwalze angewalzt.
Sofort wird der Belag manuell wieder abgeschält und die Naßklebkraft (Tack) nach Schulnoten bewertet. Weiterhin wird die Benetzung der Betagrückseite mit Klebstoff festgehalten.
Der während der gesamten Prüfung maximal erreichte Tack wird notiert.
Das Ende der offenen Zeit ist am deutlichen Abfall der Benetzung erkennbar. Bei guten PVC-Belag-Klebstoffen wird eine offene Zeit von ca. 30 Minutén erwartet. Eine offene Zeit unter 15 Minuten wird als ungenügend bezeichnet.

### 4. Ergebnis

Durch den Austausch von Hochsiedern (Beispiel 1) durch extrem schwer flüchtige Weichmacher, z.B. Phthalate, Adipate, Benzoate, wird das Harzvorprodukt zwar emissionsärmer aber sehr hochviskos und läßt sich bei den üblichen Temperaturen von 60 bis 90 °C nicht in den Klebstoff einarbeiten (Beispiel 2). Durch Erhöhung des Weichmacheranteils kann die Viskosität der Harzzubereitung gesenkt werden, die anwendungstechnischen Eigenschaften der daraus hergestellten Klebstoffe verschlechtern sich jedoch gravierend. So ist z.B. die offene Zeit verkürzt und die Viskosität des Klebstoffes trotz höherer Säurezahl des Vorproduktes viel zu niedrig (Beispiel 3).

Durch Ersatz eines Teils der Harzderivate durch Kolophoniumweichharzester (Beispiel 4) kann die Viskosität der Harzzubereitung auch ohne erhöhten Weichmacheranteil gesenkt werden. Obwohl solche Vorprodukte sehr niedrigviskos eingestellt werden können, ist die Verträglichkeit und Dispergierfähigkeit selbst unter Beibehaltung der Säurezahl der Harzzubereitung schlecht und die Produkteigenschaften, insbesondere die Anfangsklebkraft (Tack) unbefriedigend.
Es wurde nun überraschend gefunden, daß sich mit sogenannten carboxyxlierten Weichharzestern Harzzubereitungen herstellen lassen, die zu gewohnt guten Eigenschaften des Klebstoffes führen (Beispiel 5):
Die erfindungsgemäße Zubereitung läßt sich bei Temperaturen von 70 bis 80 °C problemlos einarbeiten und führt zu einem Klebstoff mit exzellenter Anfangsklebkraft, guter Rheologie und ungewöhnlich hohen Endfestigkeiten sowie Wärmestandvermögen. Mit der erfindungsgemäßen Harzzubereitung sind somit preiswerte und leistungsfähige Dispersionsklebstoffe formulierbar, die gegenüber herkömmlichen Klebstoffen (s. Beispiel 1) emissionsreduziert und deutlich geruchsärmer sind.

## Patentansprüche

1. Emissionsarmer wäßriger Dispersions-Klebstoff auf der Basis von Polyacrylaten mit einem Zusatz einer Harzmischung aus einem Kolophoniumharz und einem Weichmacher sowie weiteren Zusätzen, **dadurch gekennzeichnet, daß** die Harzmischung
a) Balsamkolophonium (Harzsäure),
b) aromatenhaltige Weichmacher mit einer Siedetemperatur bei Normaldruck von mehr als 250 °C und
c) einen bei Normaltemperatur flüssigen, carboxylierten Kolophonium-Weichharzester enthält.

2. Dispersionsklebstoff nach Anspruch 1, **gekennzeichnet durch** folgende Gewichtsanteile in Gewichtsprozent:
20 bis 60 Anteile an einer wäßrigen Polyacrylatdispersion, 5 bis 25 Teile der Harzmischung und 15 bis 55 Teile an Füllstoffen.

3. Dispersionsklebstoff gemäß Anspruch 1 oder 2, **gekennzeichnet durch** die Zusammensetzung der Harzmischung in Gew.-%:
30 bis 80 Teile an Balsamkolophonium,
10 bis 40 Teile an aromatenhaltigen Weichmachern,
05 bis 30 Teile an carboxylierten Kolophonium-Weichharzester,
0 bis 30 Teile an Kolophonium-Hartharzester und
0 bis 30 Teile an hochsiedenden Lösemitteln.

4. Dispersionsklebstoff nach einem der Ansprüche 1 bis 3, **gekennzeichnet durch** Diethylenglykol- und/oder Dipropylenglykol-Dibenzoat.

5. Verwendung des Dispersionsklebstoffes nach mindestens einem der Ansprüche 1 bis 4 zur Klebung von Fußbodenbelägen.

## Claims

1. A low emission, water-containing dispersion adhesive based on polyacrylates with an addition of a resin mixture of a rosin and a plasticizer and other additives, **characterized in that** the resin mixture contains
a) gum rosin (resin acid),
b) plasticizers containing aromatic components with a boiling temperature at normal pressure of more than 250°C and
c) a carboxylated rosin-based soft resin ester liquid at normal temperature.

2. A dispersion adhesive as claimed in claim 1, **characterized by** the following percentages by weight: 20 to 60 of an aqueous polyacrylate dispersion, 5 to 25 of the resin mixture and 15 to 55 of fillers.

3. A dispersion adhesive as claimed in claim 1 or 2, **characterized by** the following composition of the resin mixture in % by weight:
30 to 80 of gum rosin,
10 to 40 of plasticizers containing aromatic components,
5 to 30 of carboxylated rosin-based soft resin ester,
0 to 30 of rosin-based hard resin ester and
0 to 30 of high-boiling solvents.

4. A dispersion adhesive as claimed in any of claims 1 to 3, **characterized by** diethylene glycol and/or dipropylene glycol dibenzoate.

5. The use of the dispersion adhesive claimed in at least one of claims 1 to 4 for bonding floor coverings.

## Revendications

1. Adhésif sous forme de dispersion aqueuse pauvre en émission à base de polyacrylates avec addition d'un mélange de résine constitué d'une résine de colophane et d'un plastiflant ainsi que d'autres additifs,
**caractérisé en ce que**
le mélange de résines contient
a) un baume de colophane (acide résinique) ;
b) un plastifiant contenant un corps aromatique ayant un point d'ébullition à pression normale supérieur à 250°C et
c) un ester de résine molle de colophane carboxylé, liquide à température normale.

2. Adhésif sous forme de dispersion selon la revendication 1,
**caractérisé par**
les proportions pondérales suivantes, en pourcentage pondéral : 20 à 60 parties d'une dispersion aqueuse de polyacrylate, 5 à 25 parties de mélange de résine et 15 à 55 parties des charges.

3. Adhésif sous forme de dispersion selon la revendication 1 ou 2,
**caractérisé par** la composition suivante du mélange de résine, en pourcentage pondéral :
30 à 80 parties pour le baume de colophane,
10 à 40 parties pour le plastifient, contenant un corps aromatique,
5 à 30 parties pour l'ester de résine molle de colophane carbonylé,
0 à 30 parties pour l'ester de résine de colophane et
0 à 30 parties pour un solvant à haut point d'ébullition.

4. Adhésif sous forme de dispersion selon l'une des revendications 1 à 3,
**caractérisé par**
du dibenzoate de diéthylène glycol ou de dipropylène glycol.

5. Utilisation de l'adhésif sous forme de dispersion selon au moins une des revendications 1 à 4 pour coller des revêtements de sol.
